# EUROPÄISCHE PATENTSCHRIFT

(11) **EP 4 603 781 B1**
(45) Veröffentlichungstag und Bekanntmachung des Hinweises auf die Patenterteilung: **23.09.2026**
(21) Anmeldenummer: 25154439.1
(22) Anmeldetag: 28.01.2025
(51) Int. Cl.: F28D 20/00

(54) **VERFAHREN ZUM SPEICHERN UND ABGEBEN VON WÄRMEENERGIE UNTER EINSATZ EINES SPEICHERS**
METHOD FOR STORING AND RELEASING THERMAL ENERGY USING A STORAGE DEVICE
PROCÉDÉ DE STOCKAGE ET DE DISTRIBUTION D'ÉNERGIE THERMIQUE UTILISANT UN ACCUMULATEUR

(30) Priorität: 30.01.2024 DE 102024102595; 22.05.2024 DE 102024114326
(43) Veröffentlichungstag der Anmeldung: 20.08.2025
(73) Patentinhaber: Schaub, Thomas, 26607 Aurich (DE); Wessels, Marcel, 26340 Zetel (DE)
(72) Erfinder: Schaub, Thomas, 26607 Aurich (DE); Wessels, Marcel, 26340 Zetel (DE)
(74) Vertreter: Jabbusch, Matthias

(56) Entgegenhaltungen:
- DE-A1- 102009 052 304
- DE-A1- 102014 101 987
- US-A1- 2011 226 447
- US-A1- 2019 323 782

## Beschreibung

Die Erfindung betrifft ein Verfahren zum Speichern und Abgeben von Wärmeenergie unter Einsatz eines Speichers, wobei als Speichermaterial Kalziumoxid verwendet wird, das in einem Kaltkreislauf Wärme abgibt und zu Kalziumhydroxid hydriert wird und das unter Aufnahme von Wärme wieder in Kalziumoxid zurückverwandelt wird.

Deutschland hat sich zum Ziel gesetzt, die Treibhausgasneutralität bis 2045 zu erreichen. Das deutsche Klimaschutzgesetz sieht vor, bis zum Jahr 2030 den Ausstoß von Treibhausgasen um 65 Prozent und bis 2040 um 88 Prozent gegenüber dem Niveau von 1990 zu reduzieren.

Dies setzt einen beschleunigten Ausbau der erneuerbaren Energien und eine signifikante Reduzierung des Primärenergieverbrauchs voraus. Um dies zu erreichen, muss die Energieeffizienz auf allen Ebenen der Wandlungs- und Nutzungsketten deutlich gesteigert werden.

Darüber hinaus erfordert die witterungsbedingte und im Jahresverlauf variierende Verfügbarkeit erneuerbarer Energien mit der Zunahme ihres Versorgungsanteils neue Verfahren und Produkte. Dazu zählen besonders Speicher für Wärme die einerseits hocheffizient sind, als auch kostengünstig gebaut werden können. Des Weiteren sollten sie einen wirtschaftlichen und einfachen Betrieb mit hoher Auslastung ermöglichen.

Die Erfindung betrifft einen sorptiven, solaren Wärmespeicher, welcher die direkte und diffuse Strahlung der Sonne absorbiert. Das ebenfalls erfindungsgemäße Speichermaterial, wird durch die solare Energie nach Entladung wieder regeneriert und durch ein Vakuum isoliert. Die Erfindung ermöglicht damit flexible und hohe Speicherkapazitäten verlustfrei bereitzustellen.

Die Speicherung von solarer Wärmeenergie in einem Wassertank ist nicht verlustfrei. Die Tanks müssen mit starken Wärmedämmungen isoliert werden. Der ohnehin schon viel Platz beanspruchende Tank, benötigt dann noch mehr Bauvolumen. Der Einsatz von Speichern mit einem geringeren Platzbedarf, d. h. eines Speichermaterials mit einer höheren Energiedichte als jene von Wasser ist vorteilhaft. Diese Forderung kann durch verlustfreie Sorptionsspeicher erfüllt werden.

Die bekanntesten Sorptionsspeicherkonzepte sind die, die unter Verwendung von Zeolithen oder Kieselgel betrieben werden. Ein Vergleich der Energiedichten im Zeolith Speicher mit jener im Wasserspeicher ergibt einen Faktor (Speicherfaktor) von 3 bis 4. Je trockener der Zeolith bei Beginn des Entladens ist und je tiefer die Nutztemperatur bei der Adsorption geführt wird, umso höher ist die Energiedichte. Um hier eine optimale Energiedichte zu erreichen, sind hohe Desorptionstemperaturen bis ca. 300 °C notwendig, was eine breites Anwendungsfeld dieser Speicherkonzepte nicht zulässt.

Ein bislang nicht gelöstes Problem des Sorptionsspeicherkonzepts mit Zeolithen ist der Wärmeübergang zwischen Speichermaterial und Wärmetauscher. Hohe Wärmeübergangswiderstände zwischen Wärme zu- und abführenden metallischen Strukturen und dem als Granulat vorliegender Zeolith, sowie in der Zeolith-Schüttung selbst, behindern eine effektive Be- bzw. Entladung. Versuche, Zeolith-Material direkt als dicke Schicht auf metallische Träger aufzubringen, scheitern an der mangelnden Zyklen Stabilität dieses Metall-Mineralverbundes. Bei Zeolithen gefüllten Metallrohren ist das Volumenverhältnis von Träger- zu Speichermaterial dagegen unbefriedigend. Auch die hohen Kosten für die Zeolithe mit ca. 4-8,-€/kg, lassen einen wirtschaftlichen Betrieb solcher Speicher momentan nicht zu.

Im EP 2 576 720 B1 und im Schlussbericht Nr. SI/500899-01 vom 10. Dezember 2016 des Schweizerischen Eidgenössischen Departement für Umwelt, Verkehr, Energie und Kommunikation UVEK am Bundesamt für Energie BFE, Sektion Cleantech, mit dem Titel "Pilotprojekt Ettringitbasierter Wärmespeicher", wird ein Lasttragender und strukturstabiler Energiespeicher aus einem erhärteten Stoffgemisch beschrieben.

Hier soll ein Energiebeladungs- und Energieentladungssystem das erhärtete Stoffgemisch queren. Wobei das erhärtete Stoffgemisch einen Ettringitanteil von 40 Gew.-% bis 90 Gew.-% aufweist, welcher bei der Bildung des erhärteten Stoffgemisches entstanden ist, sodass ein Energiebeladevorgang durch Dehydratation des erhärteten Stoffgemisches und ein zeitversetzter Energieentladevorgang durch Befeuchtung des erhärteten Stoffgemisches, mittels des querenden Entfeuchtungs- und Befeuchtungssystem durchführbar ist.

Der erwähnte Wärmespeicher wird aus einem Dreiphasengemisch von Calcium-Sulfo-Aluminat (CSA) Zement sowie Portlandzement und Gips oder aus CSA-Zement und Gips hergestellt.

Folgende Nachteile wurden in dem beschriebenen System erkannt:
- Hoher und teurer analgentechnischer Aufwand und viele Komponenten wie Rohrleitungen, Ventilatoren, Kondensatoren, Gegenstromwärmetauscher zur Entfeuchtung und zum Luftaustausch, um den Austausch der zu speichernden Wärme mit dem Speichermedium und zur Erwärmung des Speichermaterials und Auskoppelung der Wärme bei der Wärmerückgewinnung zu gewährleisten.
- Hoher zusätzlicher mess- und steuerungstechnischer Aufwand.
- Es ist eine wasserdichte und eine gut gedämmte Einhausung ist notwendig.
- Die ermittelte Speicherdichte erreichte nur knapp 70 kWh/m3, dies wäre mit einem herkömmlichen Wasserspeicher vergleichbar.
- Bedingt durch die sekundären Anlagenteile wie Rohrleitungen, Pumpen und Wärmetauscher, relativ hohe Energieverluste von 15-25% beim Betrieb der Anlage.
- Bei zwei Ladeperioden (Sommer) konnten beim Entladen (Herbst, Winter) nur ein ΔT von ca. 10°C im Pufferspeicher generiert werden.

In der Literatur (Novel Energy-Saving Materials for Microwave Heating" Hiroaki Katsuki, Nobuaki Kamochi & Sridhar Komarneni; Chemistry of Materials, Vol. 20, S. 4803-4807, DOI: 10.1021/cm801138n und in den Offenlegungsschriften (DE 10 2014 101 987 A1 und DE 10 2009 052 304 A1) werden ähnliche Systeme und Vorgehensweisen beschrieben, jedoch ohne Angaben der konkreten Ergebnisse zur Dehydration, insbesondere der erreichten Temperaturen zur Dehydration. Grundsätzlich hat Calciumhydroxid eine sehr schwache Mikrowellenabsorptionsfähigkeit. Bei Versuchen zur Erwärmung von Ca (HO)2 ohne speziellen Tiegel und ohne Einmischung von Suszeptor Materialien wurden lediglich 96°C bei einer Strahlungsleistung von 800 Watt und einer Bestrahlungsdauer von 30 Minuten erreicht. Die Dehydration von Ca (OH)2 setzt jedoch erste bei 420°C ein.

Aus der DE 102014101987 A1 ist ein Verfahren der oben genannten Gattung bekannt. Auch aus den DE 10 2009 052 304 A1, US 2011/226 447 A1 und US 2019/323 782 A1 sind derartige Verfahren bekannt.

Der Erfindung liegt die Aufgabe zugrunde, Wärmespeicher mit kurzen Aufheizzeiten bereitzustellen.

Diese Aufgabe ist erfindungsgemäß dadurch gelöst, dass die für die Dehydrierung verwendete Speichervorrichtung eine Tiegelbauform hat, in dessen Tiegelmasse Kalziumaluminat und Quarzsand gegeben werden, wobei in die Tiegelmasse dem Kalziumaluminat ein Suszeptor hinzugeben wird, wobei der Suszeptor Kohlenstoff oder Nickel oder Kupferoxid oder Nickeloxid oder Eisenoxid oder Cobaltoxid ist.

Mit dem erfindungsgemäßen Verfahren wird ein thermochemischer Speicher gebildet. Dieser Speicher nutzt die Reaktionsenthalpie von chemischen Reaktionen, hier die Hydratation von Kalk. Kalkoxid wird mit Wasser versetzt und in Kalziumhydroxid umgesetzt. Dadurch wird Wärme freigesetzt. Unter Aufnahme von Wärme kann Kalziumhydroxid wieder Kalziumoxid zurückverwandelt werden.

Mit diesem Verfahren lassen sich hohe Energiespeicherdichten erzielen. Ein Teil der Energie kann beim Laden an die Umgebung oder an einen anderen Prozess abgegeben werden und beim Entladen von dort wieder entzogen werden. Der Speicherprozess wirkt dabei als Wärmepumpe. Wenn die Umgebungsbedingungen passen, können gute Wirkungsgrade und Entladetemperaturen erreicht werden, die deutlich über den Ladetemperaturen liegen.

Erfindungsgemäß wird für die Dehydrierung eine Speichervorrichtung verwendet, die eine Tiegelbauform hat, wobei in dessen Tiegelmasse Kalziumaluminat und Quarzsand gegeben werden und wobei in die Tiegelmasse dem Kalziumaluminat ein Katalysator hinzugeben wird, wobei der Katalysator Kohlenstoff oder Nickel oder Kupferoxid oder Nickeloxid oder Eisenoxid oder Kobaldoxid ist.

Nach einer ersten Weiterbildung des Verfahrens ist vorgesehen, dass die Hydration in einem geschlossenen und isolierten Speicher durchgeführt wird und Speichermaterial pulvriges Kalziumoxid, mit Wasser besprüht wird.

Die Hydration muss in einem geschlossenen und isolierten Wärmetauscher Reaktor erfolgen. Hier rieselt das pulvrige CaO an einer Wärmetauscher Wendel entlang und wird mit einer äquivalenten Menge an Wasser besprüht. Dies nennt man das sogenannte Kalk löschen. Hierbei tritt auch die stark exotherme Reaktion auf. Je nach Verhältnis CaO /Wasser werden unterschiedliche Temperaturen erreicht. Wichtig nach der Hydration, ist die Konsistenz des entstandenen Ca (OH)2. Es sollte weiterhin gut rieselfähig und trocken sein. Wird mit zu viel Wasser abgelöscht entsteht ein Kalk Brei oder es entstehen Verklumpungen, was die einfach Förderung im System behindert. Ebenso bewirkt das zu nasse Ablöschen des CaO in Verbindung mit Luft, ein anfängliches abbinden, was wiederum zu Verklumpungen und einer schleichenden Karbonatisierung führt. Die Karbonatisierung findet nur bei Anwesenheit von Wasser statt. Fehlt das Wasser, so kann sich das Kohlendioxid der Luft nicht darin lösen und kann vom Ca (OH)2 nicht aufgenommen werden.

Durch diese Karbonatisierung wird die Reaktivität das CaO herabgesetzt und kann nach mehreren Ladungen und Entladungen gänzlich zum Erliegen kommen (siehe Kalk Kreislauf).

**Tabelle Hydrations Temperatur**

| **CaO** | **H2O** | **Temperatur** | **Reaktionszeit** |
|---|---|---|---|
| 150 g | 600 g | 93°C | 16 min. |
| 150 g | 1000 g | 62°C | 15 min. |
| 100 g | 32 g | 310°C | 6 min. |
| 100 g | 28 g | 405°C | 4 min. |

Betrachtet man nun die chemische Reaktion und den dabei erzeugten Stoff so ergibt sich folgendes:

CaO mit 56,08 g·mol-1 + H2O mit 18,02 g·mol-1 > Ca (OH)2 mit 74,10 g·mol-1 + ΔH (67 kJ/mol)

Erstaunlicherweise wurde festgestellt, das bei geringerer Zugabe von Wasser im Bereich von 0,7 bis 0,9 mol H2O die Reaktionstemperatur über >400°C anstieg und somit auch das ΔH auf ca. 100 kJ/mol.

Chemisch würde dies bedeuten, dass kein kompletter Umsatz stattgefunden hat, jedoch eine stärkere exotherme Reaktion stattfindet, die sich positiv auf den erfindungsgemäßen Einsatz auswirkt. Ebenso verstärkte sich die Reaktivität des CaO, was eine Verkürzung der Reaktionszeit von 6 Minuten auf 2 Minuten bewirkte.

Weiterhin kann vorgesehen sein, dass für die Dehydrierung im Kalkkreislauf für das Einbringen von Wärme Mikrowellenstrahler eingesetzt werden, die auf Kalziumhydroxid gerichtet werden.

Außerdem kann vorgesehen sein, dass für die Dehydrierung dem Kalziumhydroxid ein Katalysator hinzugegeben wird, wobei der Katalysator Kohlenstoff oder Nickel oder Kupferoxid oder Nickeloxid oder Eisenoxid oder Kobaldoxid ist.

In der allgemeinen Literatur und im DE 10 2014 101 987 A1 soll die Dehydratation mit Hilfe von elektrischer Widerstandsheizung, einem Wärmeträgerfluid oder mit Heißluft durchgeführt.

Diese Varianten zeigen jedoch einen langsamen Reaktionsablauf der Beladung auf. Aufgrund der höheren Eindringtiefe der Mikrowellen wurde eine bessere Dynamik der Dehydratation gefunden und somit ein schnelleres Aufheizen des Calciumhydroxids.

Somit konnte eine Bewertung der Mikrowellenstrahlung auf die verschiedenen Bindungsarten des Wassers und der unterschiedlichen Reaktionstemperatur der jeweiligen Stoffe auf die Dehydratation getroffen werden. Anschließend wurde das Calciumhydroxid mit dem Suszeptor versetzt und deren Anteil variiert. Dabei wurde die Wärmeentwicklung der Pulverschüttung und der Umsatz mittels Aufzeichnung des Gewichts untersucht. Für eine Charakterisierung wurden die Messungen mit einer herkömmlichen Dehydratation mittels eines Ofens verglichen. Ebenso wurden Versuche und Messungen zur Permittivität von Calciumhydroxid durchgeführt.

Die Versuche zeigten, dass Calciumhydroxyd eine schwache Mikrowellenabsorptionsfähigkeit aufweist. Dies lässt sich auf die OH-Bindungsart zurückführen. Eine effektive Dehydratation ist aus diesem Grund nur möglich mit der Zugabe eines Suszeptors (Katalysator).

Die Untersuchungen der verschiedenen Zumischungen des Suszeptors zeigen im Vergleich mit dem konventionellen Aufheizen im Ofen, dass ein verbesserter Umsatz ab einer Zumischung von 10 Vol.-% Suszeptor zu erkennen ist. Hierbei konnte nach dem Ablauf von 30 Minuten eine maximale Kerntemperatur der Pulvermischung (200 ml) von 663 °C und ein Umsatz von 92% erreicht werden.

Folgende Suszeptoren, die in das zu dehydrierende Kaliumhydroxid eingebracht werden, wurden getestet und haben sich bewährt:

| **Feststoff** | | **Leistung Mikrowelle, Watt** | | **Zeit, Minuten** | | **Temperatur, °C** | |
|---|---|---|---|---|---|---|---|
| | | | | | | | |
| | C | | 500/700 | | 2/8 | | 1283/1292 |
| | Ni | | 500/700 | | 2/8 | | 384/772 |
| | CuO | | 500/700 | | 2/8 | | 701/936 |
| | NiO | | 500/700 | | 2/8 | | 840/1305 |
| | Fe3O4 | | 500/700 | | 2/8 | | 510/886 |

Bei der Untersuchung der Erwärmungseigenschaften von Stoffen und Stoffsystemen im Mikrowellenofen stellten sich fünf Stoffe und Stoffsysteme als hervorragende Mikrowellen Suszeptoren heraus, die in kurzer Zeit auf Temperaturen im Bereich von 1.200 °C bis 1.300 °C erhitzt werden konnte. Daraus ergab sich die Entwicklung einer für das Dehydrieren von Ca (OH)2 geeigneten Technik zur Erzeugung hoher Temperaturen. Die entwickelte Technik ermöglicht es, Feststoffe für Hochtemperaturprozesse und -reaktionen im genannten Temperaturbereich in sehr kurzer Zeit zu erhitzen.

Um den Aufheizprozess noch effektiver zu gestalten, wurde gefunden, dass durch Zugabe von bis zu 15 Vol.-% Suszeptoren in die Tiegelmasse bestehend aus Calcium Aluminat Klinker und Quarzsand oder Beschichtung der erhärteten Tiegelmasse mit den oben erwähnten Suszeptoren, dass die Aufheizzeiten noch extrem verkürzt werden können.

Mit der Mikrowellen Suszeptoren Technik lassen sich nun in einem Tiegel Temperaturen von 1.200 - 1.300 °C erzeugen, die mit einem Gebläse Brenner oder einem Brennofen nicht erreicht werden können. Damit eröffnet sich auch, ein großes Spektrum an wichtigen und interessanten Hochtemperaturanwendungen.

Der Aufbau ist unkompliziert und kostengünstig in der Vorbereitung und Herstellung. Eine Vorlaufzeit, wie dies zum Aufheizen eines Gebläse- oder Brennofens notwendig ist, entfällt. Auch die Dauer zum Erhitzen, beziehungsweise Glühen eines Tiegels ist mit einem Zeitrahmen von fünf bis fünfzehn Minuten im Vergleich zum Gebläse- oder Brennofen sehr gering und höchst Energieeffizienz.

Die Zeit- und Temperaturoptimierung, die bei der Hochtemperaturerzeugung mittels Mikrowellen Suszeptoren Technik im Vergleich zum Gebläse- oder Brennofens erzielt wird, wurde am Beispiel eines Widerstand-Ofens untersucht.

Der verwendete Widerstand-Ofen verfügte über eine Leistungsaufnahme von 1.000 Watt. Das Volumen der Ofenkammer betrug etwa 500 cm3. In die Ofenkammer wurde als zu erhitzender Testkörper ein 200 ml Porzellan Tiegel eingestellt. Im Vergleichsversuch wurde ein 200 ml Suszeptor Tiegel mit der Mikrowellen Suszeptoren Technik mit einer Leistungsaufnahme von 700 Watt erhitzt. Der Aufnahme des Temperaturverlaufs erfolgte mit einem Infrarotpyrometer VOLTCRAFT IR 2201-50D. Das Infrarotpyrometer hatte einen Messbereich von 600 °C bis 1.600°C.

Der Suszeptor Tiegel zeigte bei Anwendung der Mikrowellen Suszeptoren Technik eine extrem schnelle Aufheizrate. Bereits nach etwa vier Minuten war eine stabile Endtemperatur von etwa 1.300°C erreicht. Nach dieser Zeit erreichte die Temperatur des Porzellan Tiegels im Widerstands-Ofen gerade die untere Messgrenze des Pyrometers. Eine Endtemperatur von etwa 900°C stellte sich nach etwa 75 Minuten ein.

Ein Ausführungsbeispiel einer Speichervorrichtung zur Durchführung des erfindungsgemäßen Verfahrens ist in der Zeichnung dargestellt. Es zeigt:

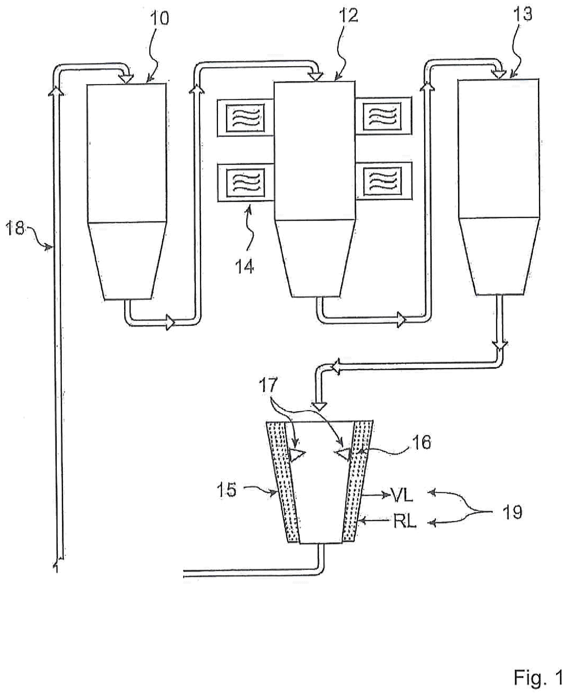

- Fig. 1:: ein Fließbild für eine Speichervorrichtung.

Das in Figur 1 gezeigte Fließbild zeigt oben links einen Vorlagebehälter 10 für hydriertes Kalziumhydroxid. Dieses Medium wird über eine Leitung in einen Dehydrationsreaktor 12 gegeben, dem über Heizungen 14, beispielsweise Mikrowellenstrahler, Wärme zugeführt wird. Das Kalziumhydroxid wird im Reaktor 12 in Kalziumoxid umgewandelt. Das dehydrierte Wärmespeichermedium wird dann über Leitungen in einen Vorlagebehälter 13 überführt.

Aus dem Vorlagebehälter 13 wird das Medium in den Reaktionsreaktor 15 geleitet. Hier wird in das Wärmespeichermedium über Einspritzdüsen 17 Wasser hinzugefügt, es erfolgt ein Rückumsatz von Kalziumoxid in Kalziumhydroxid, wobei Wärme freigesetzt wird. Der Mantel des Reaktionsreaktors besteht aus makroporösem Material. Ein Heizsystem ist über Vorlauf- und Rücklaufleitungen 19 an den Reaktionsreaktor 15 angeschlossen.

Nach seinem Durchlauf durch den Reaktionsreaktor 15 wird das Wärmespeichermedium über eine Rückleitung 18 wieder in den Vorlagebehälter 10 transportiert.

## Patentansprüche

1. Verfahren zum Speichern und Abgeben von Wärmeenergie unter Einsatz eines Speichers,
wobei als Speichermaterial Kalziumoxid verwendet wird, das in einem Kaltkreislauf Wärme abgibt und zu Kalziumhydroxid hydriert wird und das unter Aufnahme von Wärme wieder in Kalziumoxid zurückverwandelt wird,
**dadurch gekennzeichnet,**
**dass** die für die Dehydrierung verwendete Speichervorrichtung (12) eine Tiegelbauform hat, in dessen Tiegelmasse Kalziumaluminat und Quarzsand gegeben werden, wobei in die Tiegelmasse dem Kalziumaluminat ein Suszeptor hinzugeben wird, wobei der Suszeptor Kohlenstoff oder Nickel oder Kupferoxid oder Nickeloxid oder Eisenoxid oder Cobaltoxid ist.

2. Verfahren nach Anspruch 1, **dadurch gekennzeichnet, dass** die Hydration in einem geschlossenen und isolierten Speicher (15) durchgeführt wird und pulvriges Speichermaterial mit Wasser besprüht wird.

3. Verfahren nach Anspruch 1 oder 2, **dadurch gekennzeichnet, dass** für die Dehydrierung im Kaltkreislauf für das Einbringen von Wärme Mikrowellenstrahler (14) eingesetzt werden, die auf das Kalziumhydroxid gerichtet werden.

4. Verfahren nach einem der vorhergehenden Ansprüche, **dadurch gekennzeichnet, dass** für die Dehydrierung dem Kalziumhydroxid ein Suszeptor hinzugegeben wird, wobei der Suszeptor Kohlenstoff oder Nickel oder Kupferoxid oder Nickeloxid oder Eisenoxid oder Cobaltoxid ist.

## Claims

1. A method for storing and releasing thermal energy using a storage,
wherein, as the storage material, calcium oxide is used which releases heat in a cold cycle and is hydrated to form calcium hydroxide, and which is converted back into calcium oxide whilst absorbing heat,
**characterised in**
**that** the storage device (12) used for dehydrogenation has a crucible design, into the crucible mass of which calcium aluminate and quartz sand are added, wherein a susceptor is added to the calcium aluminate in the crucible mass, wherein the susceptor is carbon, or nickel, or copper oxide, or nickel oxide, or iron oxide, or cobalt oxide.

2. The method according to claim 1, **characterised in that** the hydration is carried out in a closed and insulated storage (15), and powdered storage material is sprayed with water.

3. The method according to claim 1 or 2, **characterised in that**, for the dehydrogenation in the cold cycle, microwave radiators (14), which are directed at the calcium hydroxide, are used for introducing heat.

4. The method according to any one of the preceding claims, **characterised in that**, for the dehydrogenation, a susceptor is added to the calcium hydroxide, wherein the susceptor is carbon, or nickel, or copper oxide, or nickel oxide, or iron oxide, or cobalt oxide.

## Revendications

1. Procédé de stockage et de distribution d'énergie thermique utilisant un accumulateur,
sachant que de l'oxyde de calcium est utilisé en tant que matériau de stockage, qui distribue de la chaleur dans un circuit froid et est hydrogéné en hydroxyde de calcium, et qui est reconverti à nouveau en oxyde de calcium en recevant de la chaleur,
**caractérisé en ce que**
le dispositif de stockage (12) utilisé pour la déshydrogénation a une forme de construction de creuset, dans la masse de creuset duquel sont placés de l'aluminate de calcium et du sable de quartz, sachant qu'un suscepteur est ajouté à l'aluminate de calcium dans la masse de creuset, sachant que le suscepteur est du carbone ou du nickel ou de l'oxyde de cuivre ou de l'oxyde de nickel ou de l'oxyde de fer ou de l'oxyde de cobalt.

2. Procédé selon la revendication 1, **caractérisé en ce que** l'hydrogénation est effectuée dans un accumulateur (15) fermé et isolé et qu'un matériau de stockage pulvérulent est pulvérisé avec de l'eau.

3. Procédé selon la revendication 1 ou 2, **caractérisé en ce que** des appareils émetteurs de microondes (14) sont utilisés pour la déshydrogénation dans le circuit froid pour l'introduction de chaleur, qui sont dirigés sur l'hydroxyde de calcium.

4. Procédé selon l'une quelconque des revendications précédentes, **caractérisé en ce qu'**un suscepteur est ajouté à l'hydroxyde de calcium pour la déshydrogénation, sachant que le suscepteur est du carbone ou du nickel ou de l'oxyde de cuivre ou de l'oxyde de nickel ou de l'oxyde de fer ou de l'oxyde de cobalt.
